# EUROPEAN PATENT APPLICATION

(11) **EP 1 675 348 A1**
(43) Date of publication of application: **28.06.2006**
(21) Application number: 05257618.8
(22) Date of filing: 13.12.2005
(51) Int. Cl.: H04L 29/06

(54) **Method and apparatus for negotiating service agreements**

(30) Priority: 23.12.2004 US 21126
(71) Applicant: LUCENT TECHNOLOGIES INC., Murray Hill, New Jersey 07974-0636 (US)
(72) Inventor: Bennett, Andrew Jonathan, Swindon, Wiltshire SN25 4ZA (GB); Unmehopa, Musa Raul, 3813 ZL Amersfoort (NL); Vemuri, Kumar Venkata, Naperville, Dupage 60563 (US)
(74) Representative: Sarup, David Alexander

(57) **Abstract**

The present invention provides methods for establishing a service agreement between an application and a telecommunication network. One embodiment of the method includes receiving a schema having a plurality of granules, selecting at least one granule from the schema, forming the service agreement based upon the at least one selected granule, and providing the service agreement.

## Description

### BACKGROUND OF THE INVENTION

### 1. FIELD OF THE INVENTION

This invention relates generally to telecommunication system, and, more particularly, to networks of telecommunication systems.

### 2. DESCRIPTION OF THE RELATED ART

Telecommunication networks typically provide service capabilities that may be used by third parties to develop applications. The network service capabilities can be accessed in a secure and manageable way through a defined interface. For example, Parlay/OSA provides an architecture and a set of standardized interfaces that permit third parties to develop applications using service capabilities residing in the telecommunication network. The telecommunication network may be controlled by a network operator such as Verizon, Sprint, T-Mobile, Cingular, and the like. The Service Capability Features (SCF) of the network are exposed to third parties through an interface, such as a Parlay/OSA Application Programming Interface. Access control functions may be used to authorize access to the Service Capability Features and/or service data. For example, a Parlay/OSA Framework may control access to the network by third-party applications and may determine a security level, context, domain, and the like associated with methods used by the third-party applications.

A service agreement between the third-party application provider and the network operator is typically established before any third-party application is allowed to interact with the network. The service agreements may consist of an off-line portion, such as a paper contract that may be signed by representatives of the third-party application provider and the network operator, and an online portion, which is generally an ASCII text file that may be transmitted from the network to the third-party application. The online portion of the service agreement must be digitally signed by the third-party application and returned to the network before the third-party application is allowed access to any part of the network, including the network Service Capability Features.

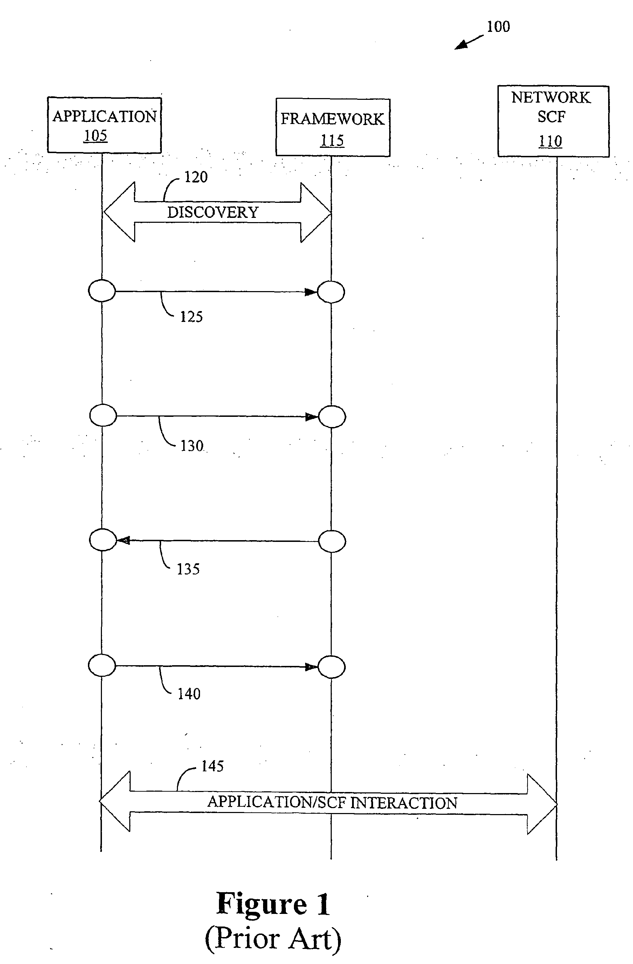

Figure 1 conceptually illustrates a conventional technique 100 that may be used to establish a service agreement between a third-party application 105 and one or more network Service Capability Features 110. In the conventional technique 100 illustrated in Figure 1, the third-party application 105 is assumed to be authenticated and authorized. The third-party application 105 accesses a framework 115 and performs a discovery process 120 to obtain information associated with the authorized Service Capability Features 110. The third-party application 105 also receives a list of one or more versions of the network Service Capability Features 110 that match the required description provided by the third-party application 105. The third-party application 105 then selects one of the versions provided by the network Service Capability Features 110 and provides a signal indicative of the selection to the framework 115, as indicated by the arrow 125. For example, the third-party application 105 may use a select Service ( ) method to select one of the versions.

After selecting the desired version, the third-party application 105 provides a signal to the framework 115 indicating that the third-party application 105 is ready to sign the service agreement, as indicated by the arrow 130. For example, the third-party application 105 may use an InitiateSignServiceAgreement () method to indicate that the third-party application 105 is ready to sign the service agreement. The framework 115 provides the service agreement to the third-party application 105, as indicated by the arrow 135. For example, the framework 115 may use a signServiceAgreement () method to request that the third-party application 105 sign the service agreement. The service agreement is typically an ASCII file that cannot be modified by the third-party application 105, and so the third-party application 105 has the option of accepting the entire service agreement or declining the entire service agreement. The third-party application 105 does not, however, have the option of modifying and/or negotiating the service agreement conditions;

The third-party application 105 decides whether or not to accept or decline the service agreement and provides a signal indicating whether it has accepted or declined the service agreement, as indicated by the arrow 140. For example, if the third-party application 105 accepts the service agreement, the third-party application 105 may provide a digital signature to the framework 115. The third-party application 105 may also request that the framework 115 sign the service agreement, which may allow the third-party application 105 to utilize the network Service Capability Features 110. Once the service agreement has been accepted and/or signed by the third-party application 105 and/or the framework 115, the third-party application 105 may begin an interaction 145 with the network Service Capability Features 110. For example, the framework 115 may return a reference to a service manager interface so that the third-party application 105 may access the network Service Capability Feature 110 via the service manager interface.

The present invention is directed to addressing the effects of one more of the problems set forth above.

### SUMMARY OF THE INVENTION

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the instant invention, a method is provided for establishing a service agreement between an application and a telecommunication network. The method includes receiving a schema having a plurality of granules, selecting at least one granule from the schema, forming the service agreement based upon the at least one selected granule, and providing the service agreement.

In another embodiment of the present invention, a method is provided for establishing a service agreement between an application and a telecommunication network. The method includes providing a schema having a plurality of granules, receiving the service agreement formed from at least one granule selected from the schema, determining whether to accept the service agreement, and providing an indication of whether the service agreement is accepted.

### BRIEF DESCRIPTION OF THE DRAWINGS

The invention may be understood by reference to the following description taken in conjunction with the accompanying drawings, in which like reference numerals identify like elements, and in which:
Figure 1 conceptually illustrates a conventional technique that may be used to establish a service agreement between a third-party application and one or more network Service Capability Features;
Figure 2 conceptually illustrates a telecommunication system including a network, in accordance with the present invention; and
Figure 3 conceptually illustrates one embodiment of a method for establishing a service agreement between an application and a framework, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, *i.e*., a meaning other than that understood by skilled artisans, such a special definition will be expressly set forth in the specification in a definitional manner that directly and unequivocally provides the special definition for the term or phrase.

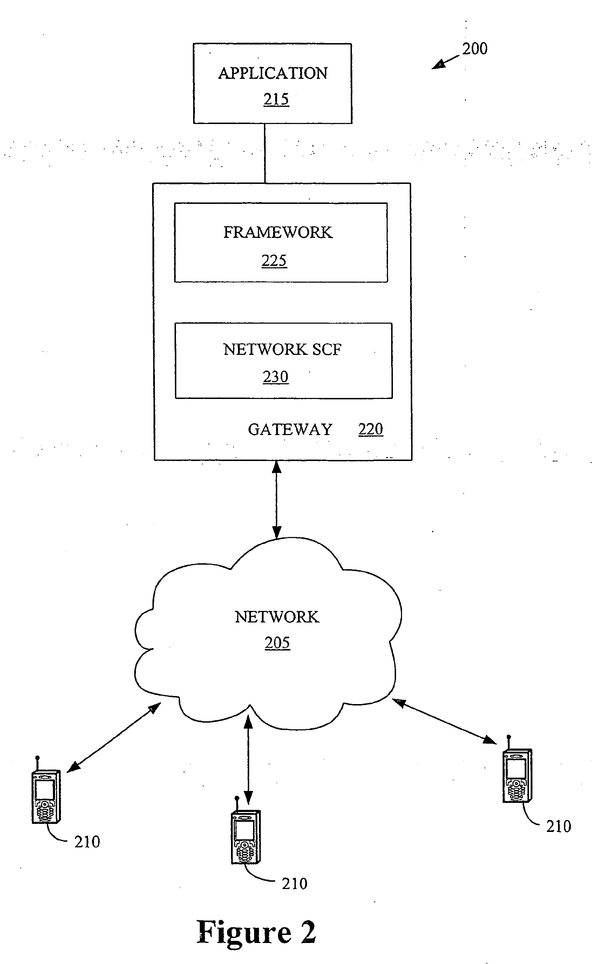

Referring now to Figure 2, a telecommunication system 200 including a network 205 is shown. The network 205 may be used to provide various telecommunication services to users 210. The telecommunications services may include, but are not limited to, voice and data transmission and/or reception. In the illustrated embodiment, the users 210 are mobile telephones and the network 205 is a wireless telecommunication network. However, persons of ordinary skill in the art should appreciate that the present invention is not limited to mobile telephones and/or a wireless network. In various alternative embodiments, the users 210 may use other types of wired or wireless telephones, personal computers, laptop computers, personal data assistants, pagers and the like, which may be coupled to a wired or wireless telecommunications network. Accordingly, in alternative embodiments, the network 205 may be any desirable combination of wireless and/or wired networks, such as Plain Old Telephone Service (POTS) networks, a Public Switched Data Network (PSDN), Universal Mobile Telephone Service (UMTS) networks, Global System for Mobile telecommunications (GSM) networks, Bluetooth networks, 802.11 networks, and the like.

The network 205 supports a variety of features, which will be referred to collectively herein as Service Capability Features (sometimes abbreviated as SCFs). In various embodiments, the Service Capability Features may include virtually anything that the network 205 is capable of doing. Some examples, which are not intended to limit the present invention but rather to help illustrate the possible variety of Service Capability Features, include providing position information associated with one or more of the users 210, providing subscriber information associated with one or more of the users 210, establishing call sessions, measuring the duration of a call session, determining a quality of service of a call session, text messaging, transmitting data to the users 210, receiving data from the users 210, and providing billing services.

One or more applications 215 may use one or more of the Service Capability Features of the network 205 to provide services to the users 210. For example, a third-party application developer may offer an application 215 that provides a restaurant locator service to the users 210. If one of the users 210 accesses the application 215 and requests a phone number for a nearby restaurant, the application 215 may use a first SCF to determine a geographic position of the user 210 and then query a database to select a restaurant that is near the location of the user 210. The application 215 may then use a second SCF to establish a data transmission session with the user 210 and third SCF to transmit the nearby restaurant's phone number to the user 210. The application 215 may also use a fourth SCF to establish a call session between the user 210 and the restaurant, using the provided phone number, and a fifth SCF may be used to bill the provider of the application 215 for use of the network 205.

The application 215 accesses the network 205 via a gateway 220. In the illustrated embodiment, the gateway includes a framework 225 and one or more network Service Capability Features (SCF) 230. The gateway 220 may be a single entity, such as a server, that implements both the framework 225 and the network Service Capability Features 230. However, the present invention is not limited to gateways 220 that are implemented in a single entity. In various alternative embodiments, portions of the gateway 220, as well as portions of the framework 225 and/or the network Service Capability Features 230, may be implemented in any desirable number of devices. For example, the gateway 220 may include one or more pointers to one or more of the network Service Capability Features 230, which may be implemented in other devices. Moreover, as should be appreciated by persons of ordinary skill in the art, the gateway 220, the framework 225, and the network Service Capability features 230 may be implemented in any desirable combination of software and/or hardware.

Before the application 215 is permitted to access the network 205 and/or the network Service Capability Features 230, a service agreement is established between an operator of the network 205 and a provider of the application 215. In one embodiment, the service agreement includes an off-line portion. For example, representatives of the operator of the network 205 and the provider of the application 215 may sign and/or exchange paper copies of the off-line portion of the service agreement. The application 215 may also authenticate itself to the network 205, which may authorize the application 215 so that it may access one or more of the network Service Capability Features 230. For example, the application 215 may provide a password to the framework 225 for authentication and/or authorization. Once authenticated and/or authorized, the application 215 may perform a discovery process to obtain information regarding the authorized network Service Capability Features 230. Techniques for authenticating and/or authorizing the application215 should be known to persons of ordinary skill in the art and so the process of authenticating and/or authorizing the application will not be discussed in further detail herein. The authenticated and/or authorized application 215 and the framework 225 may then establish a service agreement.

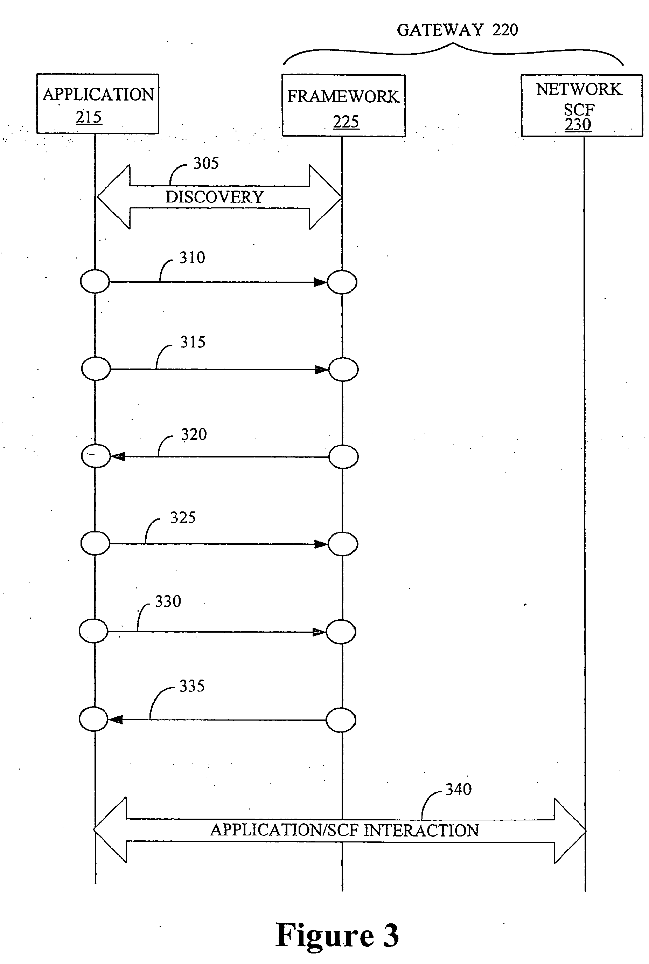

Figure 3 conceptually illustrates one embodiment of the method 300 for establishing a service agreement between the application 215 and the framework 225. In the illustrated embodiment, the framework 225 and the network Service Capability Features 230 are included in the gateway 220, as discussed above. The application 215 first conducts discovery with the framework 225 to determine the available network Service Capability Features 230, as indicated by the arrow 305. The application 215 then selects one or more services based upon the results of the discovery process and provides an indication of the selected services to the framework 225, as indicated by the arrow 310. For example, the application 215 may select a version of the network Service Capability Features 230 based on the results of the discovery process. The application 215 then initiates a service agreement negotiation as indicated by the arrow 315. For example, the application 215 may initiate the service agreement negotiation using an initiateSignServiceAgreement ( ) method.

The framework 225 forms a proposed service agreement schema, which is then provided to the application 215 as indicated by the arrow 320. The schema is a definition of the metes and bounds of a service agreement that would be acceptable to the framework 225. In one embodiment, the schema includes a plurality of granules (sometimes referred to as service agreement elements) that are each indicative of the part of a service agreement that would be acceptable to the framework 225. In one embodiment, the framework 225 forms a proposed service agreement schema by selecting from among one or more pre-negotiated "granule pointers." The granule pointers express the service agreement parameters that the framework 225 is willing and/or able to support. For example, the granule pointers may indicate three possible quality of service classifications (Gold, Silver, Bronze). Each quality of service classification is provided as a granule in the schema. In one embodiment, the schema and/or the granules are determined based upon an enterprise domain associated with the application 215.

In one embodiment, the schema and the granule pointers may be provided using extensible Markup Language (XML). However, persons of ordinary skill in the art should appreciate that the present invention is not limited to schema and/or granules that are provided in XML. In alternative embodiments, any desirable means of conveying the schema and/or the granule pointers may be used. Schema and granule pointers for a service agreement that specifies a quality of service, the charging or billing method, and like may be formed in XML as follows. The schema for the quality of service (QoS) having granule pointers to granules for "Gold," "Silver," and "Bronze" may be: 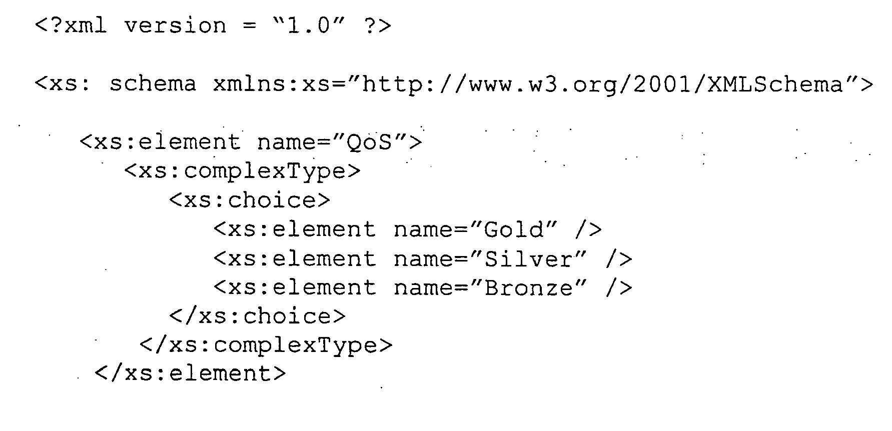 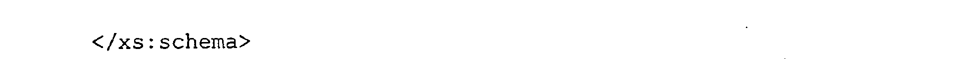 A schema for the charging having granule pointers to granules for "Premium," "Normal," and "Discount" may be:

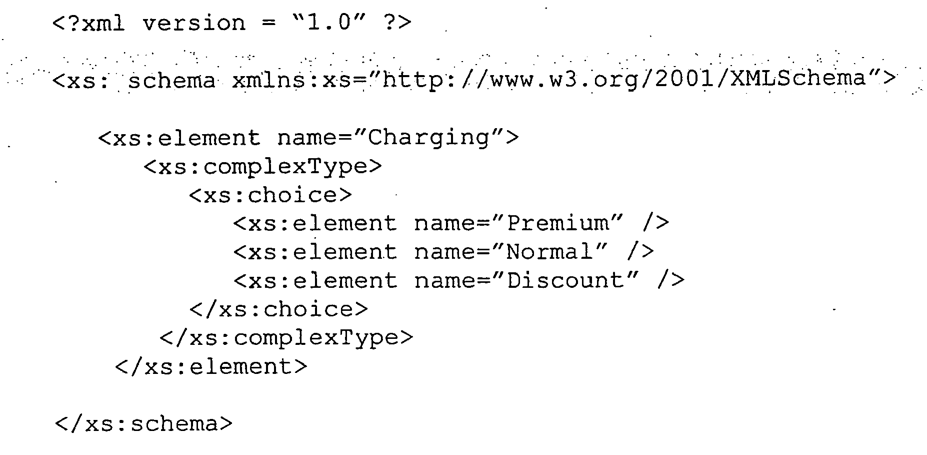

Additional schema for other Service Capability Features may be written in the form: 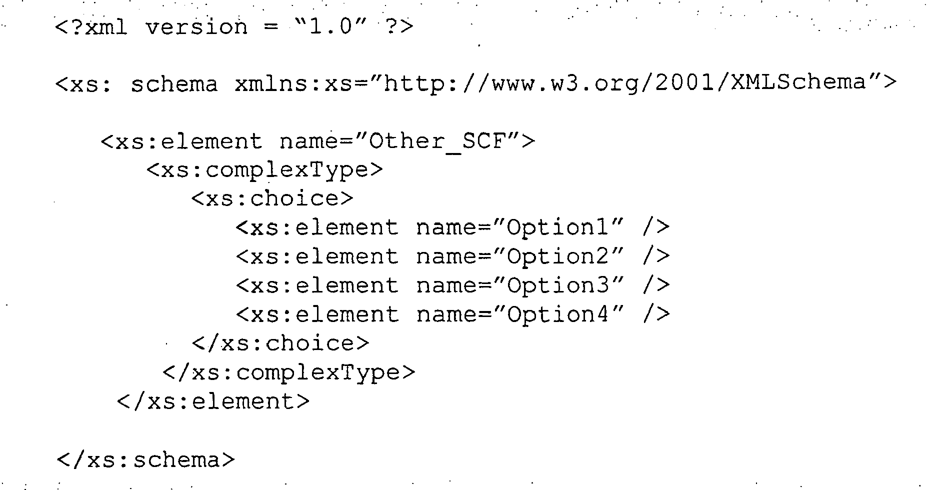 Persons of ordinary skill in the art should appreciate that the above schema are intended to be illustrative and not to limit the present invention. In alternative embodiments, any desirable number or type of schema and/or granule may be used.

An example of the service agreement schema definitions proposal formed by the framework 225 using the above schema is shown below. In this example, framework 225 has selected granules for quality of service ("QoS") and charging ("Charging"): 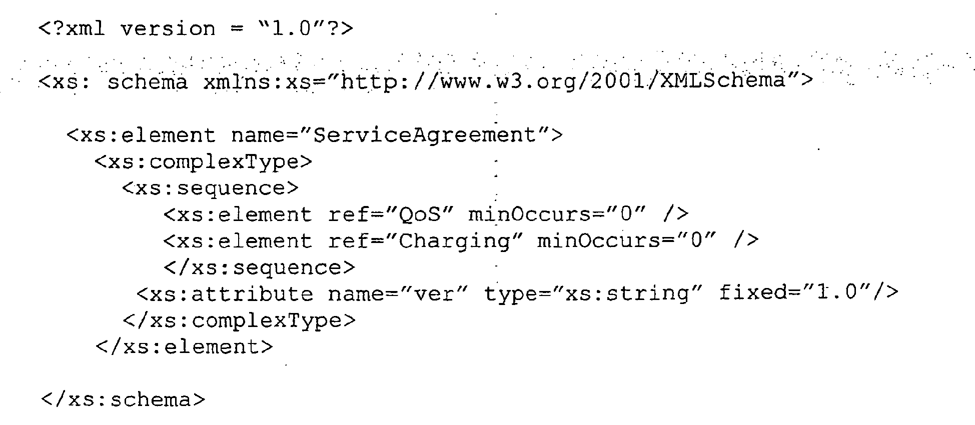 The proposed service agreement schema is provided to the application 215.

Upon receipt of the proposed service agreement schema from the framework 225, the application 215 provides an indication that the proposed service agreement schema is acceptable, as indicated by the arrow 325. In one embodiment, the application 215 digitally signs the proposed service agreement schema and returns the signed schema to the framework 225. The indication provided by the application 215 establishes an agreement that the proposed service agreement schema is to be used to form the actual service agreement. The client application 215 then selects one or more granules from the proposed service agreement schema. For example, the application 215 may select the "Gold" granule from the quality of service schema and the "Premium" granule from the charging schema. In one embodiment, the application 215 also selects one or more parameters for the selected granules. For example, the granules in the quality of service schema may accept a parameter indicating a minimum and/or a maximum bit error rate. The application 215 forms a service agreement based upon the selected granules and provides the service agreement to the framework 225, as indicated by the arrow 330. However, the present invention is not limited to accepting (at 325) the service agreement and then providing (at 330) the service agreement based upon selected granules. In alternative embodiments, these steps may be performed in any desirable order. For example, the application 215 may form the service agreement based upon the selected granules and provide the service agreement to the framework 225, which may then accept (or decline) the proposed service agreement.

The framework 225 verifies that the service agreement received from the application 215 conforms to the proposed service agreement statement definition. In one embodiment, the framework 225 determines whether the parameters proposed by the application 215 are within a scope associated with the application 215. The framework 225 may also determine whether the parameters proposed by the application 215 cause internal logical inconsistencies. Once the various checks have been successfully completed, the framework 225 provides an indication that the schema's dedication proposed by the application 215 is acceptable, as indicated by the arrow 335. For example, the framework 225 may provide a text indicative of the agreed-upon service agreement. An example of the service agreement text, i.e. the selected schema instantiation, is: 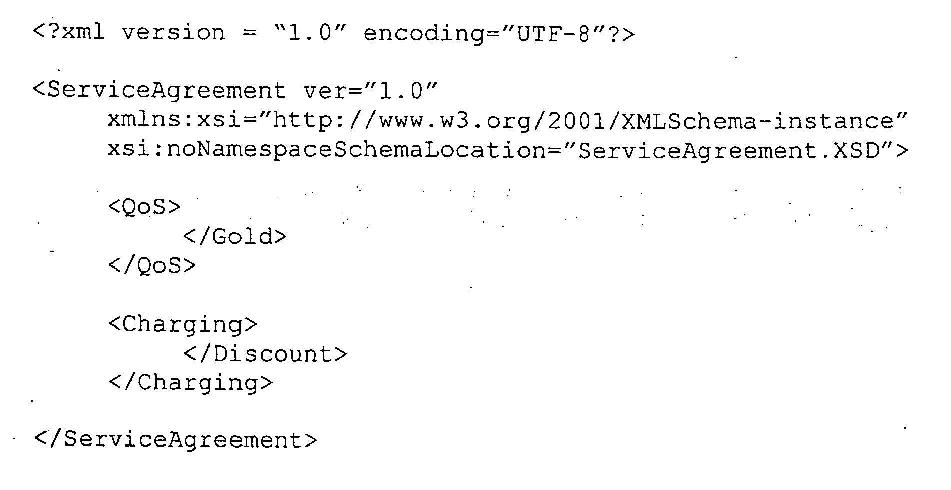 The framework 225 may also digitally sign the service agreement and provide the signed service agreement to the application 215. In one embodiment, the service agreement may be passed using existing standardized mechanisms. For example, in the standard API specification, the data type for a service agreement parameter in the signServiceAgreement ( ) method is defined as a text string. Upon receipt of the service agreement from the framework 225, the application 215 and the network Service Capability Features 230 may interact, as indicted by the arrow 340.

One or more embodiments of the invention discussed above may provide advantages over conventional to be as for establishing a service agreement between an application, such as the application 215, and a network, such as the network 205. For example, the flexibility of the service agreement may be improved so that the application 215 may select a service agreement that is more closely aligned with the needs of the application 215 and yet is still acceptable to the framework 225. Furthermore, since embodiments of the negotiation mechanism discussed above make use of predefined schema definitions, the gateway 220 may automatically parse a text of the proposed and/or agreed-upon service agreements, verify that selected parameters associated with the service agreements are within the scope of parameters associated with developers of the application 215, and validate that these parameters do not cause internal logical inconsistencies. This is a clear benefit above and beyond passing free-format text documents.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method toward establishing a service agreement between an application and a telecommunication network, comprising:
receiving a schema having a plurality of granules;
selecting at least one granule from the schema;
forming the service agreement based upon the at least one selected granule; and
providing the service agreement.

2. The method of claim 1, wherein receiving the schema comprises receiving a schema selected for an enterprise domain associated with the application.

3. The method of claim 1, wherein receiving the schema comprises providing a digital signature indicating acceptance of the schema.

4. The method of claim 1, wherein forming the service agreement comprises forming a text document based on the at least one selected granule.

5. The method of claim 1, comprising receiving an indication that the service agreement is accepted.

6. A method toward establishing a service agreement between an application and a telecommunication network, comprising:
providing a schema having a plurality of granules;
receiving the service agreement formed from at least one granule selected from the schema;
determining whether to accept the service agreement; and
providing an indication of whether the service agreement is accepted.

7. The method of claim 6, wherein providing the schema comprises selecting the schema based on an enterprise domain associated with the application.

8. The method of claim 6, wherein receiving the service agreement comprises receiving a digital signature indicating acceptance of the schema.

9. The method of claim 6, wherein determining whether to accept the service agreement comprises determining whether the service agreement conforms to a definition of the schema.

10. The method of claim 6, wherein providing the indication of whether the service agreement is accepted comprises providing a digital signature.
